# EUROPEAN PATENT APPLICATION

(11) **EP 4 838 130 A1**
(43) Date of publication of application: **11.11.2026**
(21) Application number: 26177104.2
(22) Date of filing: 07.05.2026
(51) Int. Cl.: F21L 4/00, F21L 2/00, F21V 31/00, F21V 33/00, G03B 15/05, G03B 17/08, F21Y 115/10

(54) **LIGHTING FIXTURE AND UNDERWATER LIGHTING FIXTURE**

(30) Priority: 08.05.2025 JP 2025077925
(71) Applicant: AOI JAPAN CO., LTD., Yokohama-shi, Kanagawa 221-0056 (JP)
(72) Inventor: KUNO, Yoshinori, Yokohama-shi (JP); EGUCHI, Yasushi, Yokohama-shi (JP); YOSHIDA, Mitsuhiro, Yokohama-shi (JP); NAKAMURA, Taira, Yokohama-shi (JP)
(74) Representative: Modiano, Gabriella Diana

(57) **Abstract**

The present invention for solving the above problems is a lighting fixture (1) including: a housing (2) including an opening (21); and a grip (3) extending from the housing (2), in which the lighting fixture (1) includes an IR transmission unit (22), an IR reception unit (23), and an operation unit (25) capable of instructing the IR transmission unit (22) to transmit a dimming signal, and the IR transmission unit (22) and/or the IR reception unit (23) include a wired connection port (24) that enables wired optical communication by wired connection with another lighting fixture (1) via a cable (5).

## Description

### BACKGROUND

### Technical Field

The present invention relates to a lighting fixture and an underwater lighting fixture.

### Related Art

It is widely practiced to take photographs of living organisms, natural objects, and the like in an underwater environment through activities such as scuba diving. When taking photographs of living organisms, natural objects, and the like in an underwater environment, a lighting fixture is used in combination with photographing equipment.

Here, since a person is strongly affected underwater by the density and resistance of water as compared with air, the motion is slower than usual, and the movement may be limited. Therefore, conventionally, a technique of connecting a lighting fixture and a dimming switch separated from the lighting fixture with infrared rays (IR) is known.

In addition, as a conventional technique related to infrared-ray (IR) connection, there is known a lighting fixture that includes a transmission unit that transmits an infrared light signal and a reception unit that receives the infrared light signal reflected by an object, and controls switching of a light emission mode in response to a position of the object calculated from the infrared light signal.

### SUMMARY

Conventionally, there has been no study on a technique for simultaneously dimming a plurality of lighting fixtures in a state in which a flashlight-like lighting fixture held by one person in one hand is connected by wire.

An object of the present invention is to provide a technique for efficiently and easily operating a plurality of flashlight-like lighting fixtures even under water.
[1] The present invention for solving the above problems is a lighting fixture including: a housing including an opening; and a grip coupled to the housing, in which
   the lighting fixture includes
   an IR transmission unit,
   an IR reception unit, and
   an operation unit capable of instructing the IR transmission unit to transmit a dimming signal.
   In the present invention for solving the above problems, the IR transmission unit and/or the IR reception unit include a wired connection port that enables wired optical communication by wired connection with another lighting fixture via a cable.
[2] In addition, the present invention is an underwater lighting fixture including: a housing including an opening; and a grip coupled to the housing, in which
   the underwater lighting fixture includes
   an IR transmission unit,
   an IR reception unit,
   an operation unit capable of instructing the IR transmission unit to transmit a dimming signal, and
   a waterproof wall having translucency and arranged to close the opening of the housing.
   In the present invention according to [2], the IR transmission unit and/or the IR reception unit include a wired connection port that enables wired optical communication by wired connection with another lighting fixture via a cable.
[3] A preferred embodiment of the present invention is also the lighting fixture according to [1] or [2], in which the IR transmission unit and the IR reception unit are provided on an outer wall of the housing.
[4] A preferred embodiment of the present invention is also the lighting fixture according to any one of [1] to [3], in which the operation unit includes a dimming switch, and
   the dimming switch is provided in the housing.
[5] A preferred embodiment of the present invention is also the lighting fixture according to any one of [1] to [4], in which the operation unit includes two or more dimming switches, and
   the dimming switch, the IR transmission unit, and the IR reception unit are provided on the same circumference of the housing.
[6] The present invention is also a lighting fixture set including:
   two or more of the lighting fixtures described above; and
   a cable that enables optical communication by wired connection between the wired connection port of one of the lighting fixtures and the wired connection port of another one of the lighting fixtures.
[7] The present invention is also a method for dimming the lighting fixture including
   two or more of the lighting fixtures described above, and
   a cable that enables optical communication by wired connection between the wired connection port of one of the lighting fixtures and the wired connection port of another one of the lighting fixtures, the method including
   dimming the another one of the lighting fixtures by the operation unit of the one of the lighting fixtures.

According to the present invention, it is possible to provide a technique for efficiently and easily operating a plurality of flashlight-like lighting fixtures even under water.

### BRIEF DESCRIPTION OF DRAWINGS

FIGS. 1A and 1B are views illustrating an entire structure of a lighting fixture of the present embodiment;
FIGS. 2A and 2B are views illustrating an optical fiber cable of the present embodiment;
FIG. 3 is a view illustrating a mode in which the optical fiber cable is connected to the lighting fixture of the present embodiment;
FIG. 4 is a functional block diagram including an internal structure of the lighting fixture of the present embodiment;
FIG. 5 is a dimming flowchart when the lighting fixtures of the present embodiment are connected to one another and a master device is dimmed;
FIGS. 6A and 6B are views illustrating a connection example among the lighting fixtures of the present embodiment;
FIG. 7 is a view illustrating a connection example among the lighting fixtures of the present embodiment; and
FIG. 8 is a view illustrating a connection example among the lighting fixtures of the present embodiment.

### DETAILED DESCRIPTION

A lighting fixture 1 of the present embodiment will be described below. However, the technical scope of the present invention is not limited to the examples.

### <1> Lighting fixture 1

The present invention is the lighting fixture 1 including a housing 2 having an opening 21, and a grip 3 coupled to the housing 2.

Here, the present embodiment is preferably the lighting fixture 1 including the housing 2 having the opening 21, and the grip 3 extending from the housing 2. Examples of the lighting fixture 1 of the above mode include a flashlight and a hand light.

In addition, in the present specification, the underwater lighting fixture 1 refers to the lighting fixture 1 having waterproof performance and light irradiation performance suitable for use under water.

The present invention includes an IR transmission unit 22,
an IR reception unit 23, and
an operation unit 25 capable of instructing the IR transmission unit 22 to transmit a dimming signal.

In addition, in the present invention, the IR transmission unit 22 and the IR reception unit 23 are provided on an outer wall of the housing 2.

In addition, in the present invention, the IR transmission unit 22 and/or the IR reception unit 23 include a wired connection port 24 that enables wired optical communication by wired connection with another lighting fixture 1 via a cable.

With the above mode, the plurality of lighting fixtures 1 can be synchronized. Then, with the above mode, the plurality of flashlight-like lighting fixtures 1 can be efficiently and easily operated even under water.

The "wired optical communication" refers to a general communication scheme in which an optical signal is transmitted and received through the optical fiber cable 5, a plastic optical fiber, or another optically transmissive linear or funicular medium.

"Synchronized" refers to a state in which operation (for example, turn-on, turn-off, luminance change, and light emission) timings of the plurality of lighting fixtures 1 coincide with each other with a practically negligible time difference (for example, millisecond order or less, preferably microsecond order or less).

First, details of the housing 2 and the grip 3 will be described below.

### (1) Housing 2

In the present specification, the housing 2 is a member that forms a part of the framework of the lighting fixture 1 and has an opening 21 that guides light from a light source (not illustrated) in one direction.

The housing 2 is a member corresponding to a head when the lighting fixture of the present embodiment is a flashlight.

In addition, the "outer wall of the housing 2" refers to a surface that directly contacts an external environment (air, water, or the like) in a normal use state among walls constituting the housing of the lighting fixture 1.

In the present specification, the housing 2 is preferably made of a material having waterproofness, pressure resistance (particularly when used in the sea), corrosion resistance (against seawater and the like), and mechanical strength.

Examples of the material of the housing 2 include a resin material (acrylic or polycarbonate), a metal material (aluminum alloy or stainless material), and tempered glass.

The shape of the housing 2 is not particularly limited, and can be, for example, a cylindrical shape or a square cylindrical shape.

### (2) Grip 3

The lighting fixture 1 of the present embodiment includes the grip 3 connected to the housing 2. The grip 3 is a member for a user to stably hold the lighting fixture 1 by hand.

The grip 3 is a member corresponding to a body when the lighting fixture of the present embodiment is a flashlight.

Here, the grip 3 may be in either a mode in which the housing 2 and the grip 3 are integrally formed or a mode in which the housing 2 and the grip 3 are connected as separate components. In addition, the lighting fixture 1 of the present embodiment may be in a mode including the grip 3 extending from the housing 2.

In the present specification, the grip 3 is preferably made of a material having waterproofness, pressure resistance (particularly when used in the sea), corrosion resistance (against seawater and the like), and mechanical strength.

Examples of the material of the grip 3 include a resin material (acrylic or polycarbonate), a metal material (aluminum alloy or stainless material), and tempered glass.

In the lighting fixture 1 of the present embodiment, a control unit, which controls an instruction from the operation unit 25, and a power supply unit are preferably accommodated in the grip 3.

Next, each configuration included in the lighting fixture 1 will be described in more detail below.

In the present embodiment, the housing 2 of the lighting fixture 1 includes the IR transmission unit 22, the IR reception unit 23, and the wired connection port 24 on the outer wall thereof.

### (1-1) IR Transmission unit 22

The IR transmission unit 22 is a member that converts an electrical dimming signal from the operation unit 25 into an infrared light (IR) signal of a specific wavelength and sends the IR signal to the connection cable (optical fiber cable 5) via the wired connection port 24.

The IR transmission unit 22 mainly includes an infrared light emitting element (infrared light emitting diode; IR-LED), a transistor that drives the IR-LED, and a constant current circuit. In the present embodiment, for example, in order to enhance the coupling efficiency to the optical fiber, an optical component such as a condenser lens may be interposed between the IR-LED and an optical fiber end surface.

### (1-2) IR reception unit 23

The IR reception unit 23 is a member that receives the dimming signal from the IR transmission unit 22, converts the dimming signal into an electrical signal, and inputs the electrical signal to the operation unit 25.

The IR reception unit 23 mainly includes an infrared light receiving element (phototransistor), an amplifier, and a reception circuit (for example, transimpedance amplifier or comparator) that shapes into a digital signal or the like. In the present embodiment, for example, in order to reduce the influence of ambient light (sunlight or the like), an optical filter that transmits only a specific wavelength band may be arranged on a front surface of the light receiving element.

### (1-3) Wired connection port 24

In the present embodiment, the wired connection port 24 is a mechanism capable of fixing a terminal 51 of a cable described later in an inserted state. In the present embodiment, the wired connection port 24 is preferably provided so as to surround each of the IR transmission unit 22 and the IR reception unit 23.

With the above mode, the IR transmission unit 22 and/or the IR reception unit 23 can be connected to another lighting fixture 1 by wire via a cable.

Here, the wired connection port 24 is preferably a wired connection hole.

In addition, the wired connection port 24 preferably includes a fixing portion capable of fixing the terminal 51 of the cable in an inserted state.

### (1-4) Arrangement of IR transmission unit 22 and IR reception unit 23, and wired connection port 24

In the present embodiment, the IR transmission unit 22 and the IR reception unit 23 are arranged on the outer wall of the housing 2.

With the above mode, since the wired connection port 24 (optical connector port of the outer wall) does not interfere with the grip 3, the lighting fixture 1 can be more easily handled even under water.

In addition, the IR transmission unit 22 and the IR reception unit 23 are preferably provided on the same circumference of the housing 2.

With the above mode, since the wired connection port 24 (optical connector port of the outer wall) does not interfere with the grip 3, the lighting fixture 1 can be more easily handled even under water.

### (2) Each configuration including internal structure of lighting fixture 1

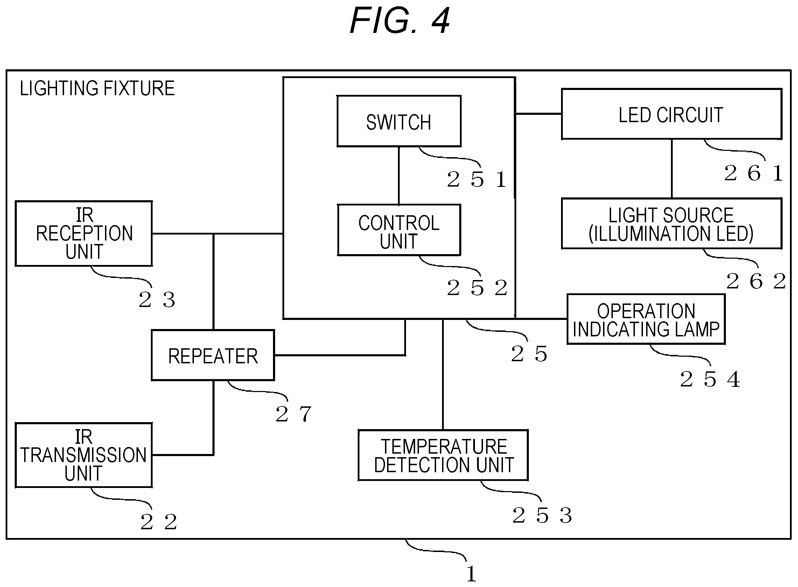

Next, each configuration including the internal structure of the lighting fixture 1 will be described in more detail below with reference to FIG. 4.

### (2-1) Operation unit 25

The operation unit 25 is a member having a function of receiving a user input and dimming the light source of its own lighting fixture 1. In addition, the operation unit 25 is a member having a function of receiving a user input, generating a dimming signal to another lighting fixture 1 connected by wire via a cable, outputting the dimming signal from the IR transmission unit 22, and dimming the light source of another lighting fixture 1.

In the present embodiment, the operation unit 25 preferably is in a mode including a dimming switch 251, which receives a user input, and a control unit 252.

### (i) Dimming switch 251

The dimming switch 251 preferably has any function of an ON/OFF switch for controlling an ON/OFF signal, a light amount changing switch for controlling a signal for designating a brightness level, a color temperature changing switch for controlling a signal for designating a color temperature, and a strobe switch for controlling a light emission timing. Since the operation unit 25 includes the dimming switch 251 having any one of the above functions, it is possible to more easily operate the lighting fixture under water.

In the present embodiment, the various dimming switches 251 (ON/OFF switch, light amount changing switch, and color temperature changing switch) included in the operation unit 25 are arranged on the outer wall of the housing 2. With the above mode, the IR reception unit 23 can efficiently receive the optical signal from the wired connection port 24 (optical connector port of the outer wall). In addition, with the above mode, since the grip 3 does not interfere with the IR transmission unit 22 or the IR reception unit 23, the lighting fixture 1 can be more easily handled even under water. In addition, the IR transmission unit 22, the IR reception unit 23, and the various dimming switches 251 included in the operation unit 25 are preferably provided on the same circumference of the housing 2.

The number of the dimming switches 251 provided in the lighting fixture 1 is preferably two or more, and more preferably three or more. In addition, the number of the dimming switches 251 provided in the lighting fixture 1 can be five or less as a guide.

A more preferable mode in a case where the lighting fixture 1 includes the plurality of dimming switches 251 will be described below.

In a case where the lighting fixture 1 includes the plurality of dimming switches 251, preferably, two or more dimming switches 251, the IR transmission unit 22, and the IR reception unit 23 are provided on the same circumference of the housing 2.

With the above mode, since the IR transmission unit 22, the IR reception unit 23, and the dimming switch 251 do not interfere with the grip 3, the lighting fixture 1 can be more easily handled even under water.

In a case where two or more dimming switches 251, the IR transmission unit 22, and the IR reception unit 23 are provided on the same circumference of the housing 2, the IR transmission unit 22 and the IR reception unit 23 are preferably provided adjacent to each other.

In the present specification, "the IR transmission unit 22 and the IR reception unit 23 are adjacent" means that the dimming switch 251 is not provided between a line segment connecting the IR transmission unit 22 and the IR reception unit 23 at the shortest distance on the circumference of the housing 2.

With the above mode, since the IR transmission unit 22, the IR reception unit 23, and the dimming switch 251 do not interfere with the grip 3, the lighting fixture 1 can be more easily handled even under water.

### (ii) Control unit 252

The control unit 252 preferably has (1) a dimming function of its own light source 26 and/or (2) a dimming signal generation/transmission function to another lighting fixture 1.

Here, each of the above-described functions of the control unit 252 is preferably operated according to the user input or the dimming signal from another lighting fixture 1.

With the above mode, the light of another lighting fixture 1 can be adjusted while the light of its own lighting fixture 1 is adjusted.

In addition, the control unit 252 may have a function of receiving and controlling the dimming signal transmitted from another lighting fixture 1.

Here, the "dimming signal" broadly means a signal that transmits information for controlling the turn-on state of the lighting fixture 1. The "dimming signal" includes a simple ON/OFF signal, a signal designating a brightness level, a signal designating a color temperature, a signal designating a light emission timing (for example, a strobe synchronization signal), a signal designating a blinking pattern, or a combination of these signals.

Here, in the present specification, the control unit 252 may be in a mode having a plurality of functions among control of an ON/OFF signal, control of a signal designating a brightness level, and control of a signal designating a color temperature.

In addition, the control unit 252 may be in a mode having an operation display (indicator) function, a battery remaining amount determination function, and a temperature detection function.

Here, in a mode in which the control unit 252 has the temperature detection function, the lighting fixture 1 may include a temperature detection unit 253 for detecting a temperature.

Here, in a mode in which the control unit 252 has the operation display (indicator) function and the battery remaining amount determination function, the lighting fixture 1 may be in a mode including display means that displays the control content/determination content (for example, an operation indicating lamp 254).

### (2-2) Light source 26

The light source 26 is a light emitting diode (LED; an illumination LED 262). Since the light source 26 is a light emitting diode (LED), heat generation of the entire lighting fixture can be further suppressed. However, the type of the light source 26 is not particularly limited.

In addition, the lighting fixture 1 preferably includes an LED circuit 261 for transmitting a dimming signal of the illumination LED 262. The LED circuit 261 is preferably connected to the control unit 252 described above.

### (2-3) Repeater 27 (relay device)

The lighting fixture 1 preferably includes a repeater 27 (relay device) therein.

Here, the repeater 27 (relay device) is preferably connected to the IR transmission unit 22 and the IR reception unit 23.

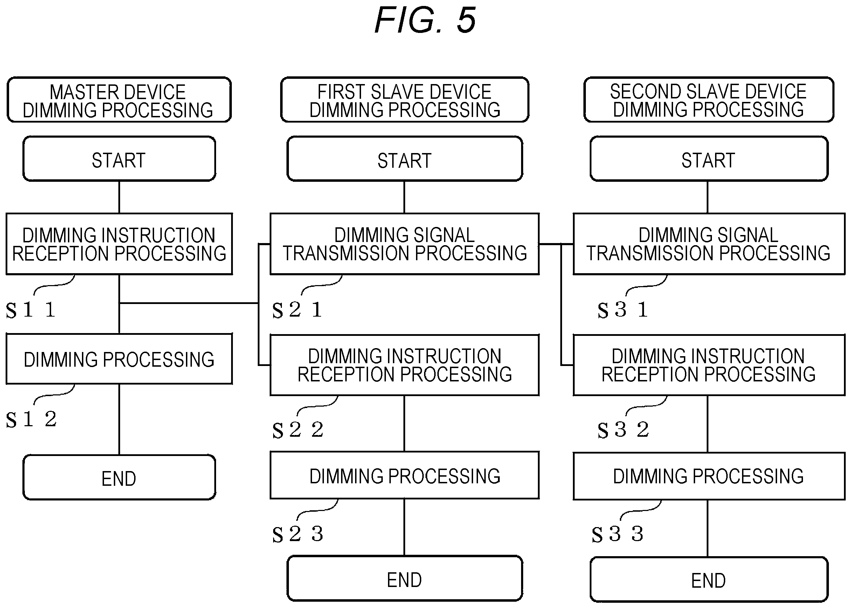

With the above mode, the lighting fixture 1 (corresponding to a first slave device in FIG. 5) can output, from the IR transmission unit 22, an input signal from another lighting fixture 1 (corresponding to the master device in FIG. 5) as a dimming signal to another lighting fixture 1 (corresponding to a second slave device in FIG. 5) without passing through the control unit 252. With the above mode, it becomes unnecessary to pass through the control unit 252 for the transmission of a dimming signal from the lighting fixture 1 (corresponding to the first slave device in FIG. 5) to another lighting fixture 1 (corresponding to the second slave device in FIG. 5), and thus a time lag of dimming of each lighting fixture 1 can be reduced.

The transmission of dimming to another lighting fixture 1 in a mode in which the repeater 27 (relay device) is connected to the IR transmission unit 22 and the IR reception unit 23 will be described in more detail below with reference to FIG. 5.

### (i) Dimming processing of master device: dimming instruction reception processing S11 and dimming processing S12

First, as illustrated in FIG. 5, the lighting fixture 1 serving as the master device (hereinafter, simply referred to as a master device for convenience of description) receives a user input (dimming instruction reception processing S11). Then, the master device generates a dimming signal to another lighting fixture 1 (the first slave device in FIG. 5) together with dimming of the light source of its own lighting fixture 1, and outputs the dimming signal from the IR transmission unit 22 (dimming processing S12).

### (ii) Dimming processing of first slave device: dimming signal transmission processing S21 and dimming processing S23

Next, the IR reception unit 23 of the lighting fixture 1 serving as the first slave device (hereinafter, simply referred to as a first slave device for convenience of description) receives the dimming signal from the master device. Then, the dimming signal received by the IR reception unit 23 of the first slave device is output from the IR transmission unit 22 via the repeater 27 (relay device) (dimming signal transmission processing S21).

At the same time, the control unit 252 of the first slave device adjusts the light source of its own first slave device according to the dimming signal received by the IR reception unit 23.

### (iii) Dimming processing of second slave device: dimming signal transmission processing S31 and dimming processing S33

Next, the IR reception unit 23 of the lighting fixture 1 serving as the second slave device (hereinafter, simply referred to as a second slave device for convenience of description) receives the dimming signal from the first slave device. Then, the control unit 252 of the second slave device adjusts the light source of its own second slave device according to the dimming signal received by the IR reception unit 23.

In addition, the dimming signal received by the IR reception unit 23 is output from the IR transmission unit 22 via the repeater 27 (relay device) (dimming signal transmission processing S31).

If wired connection to a third slave device is established, a dimming signal is transmitted to the third slave device by the processing similar to (ii).

### (3) Waterproof wall 4

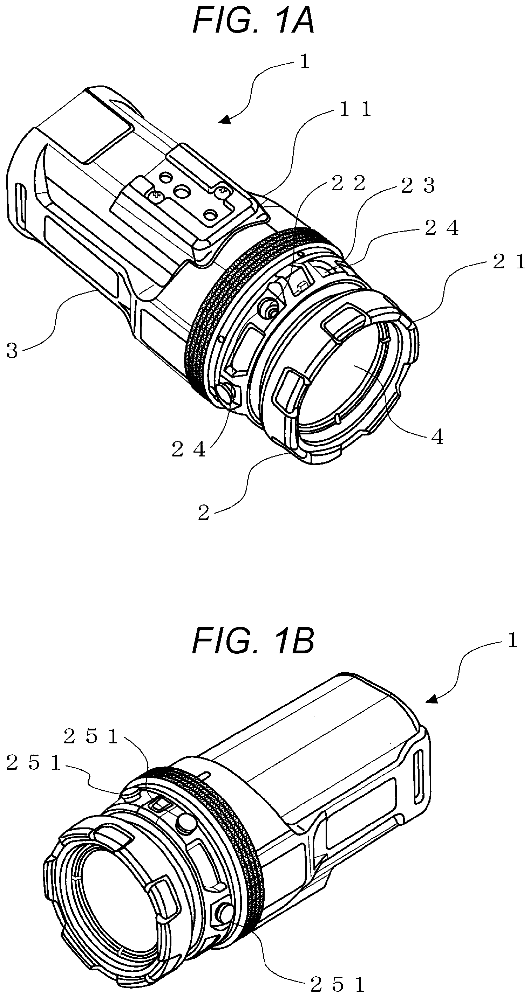

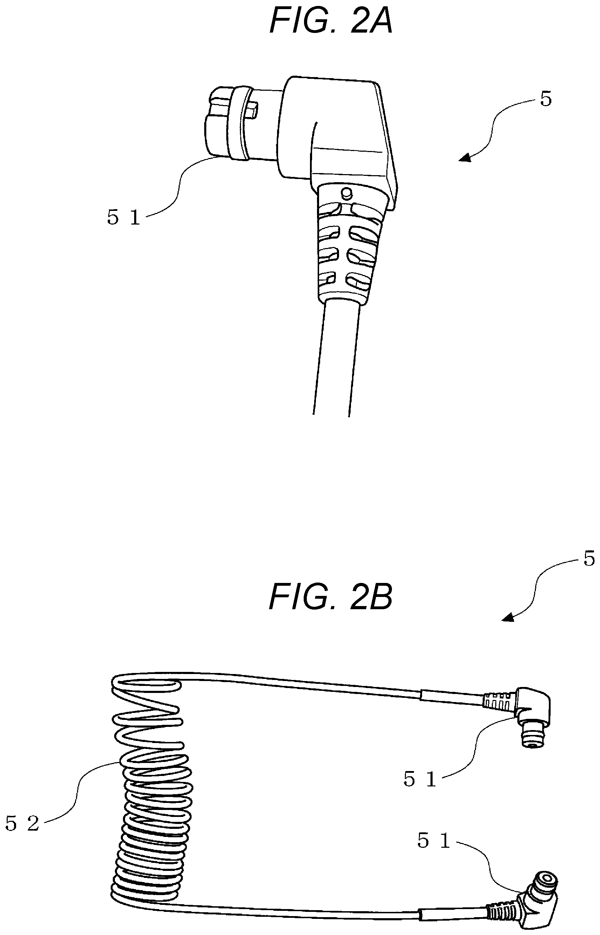

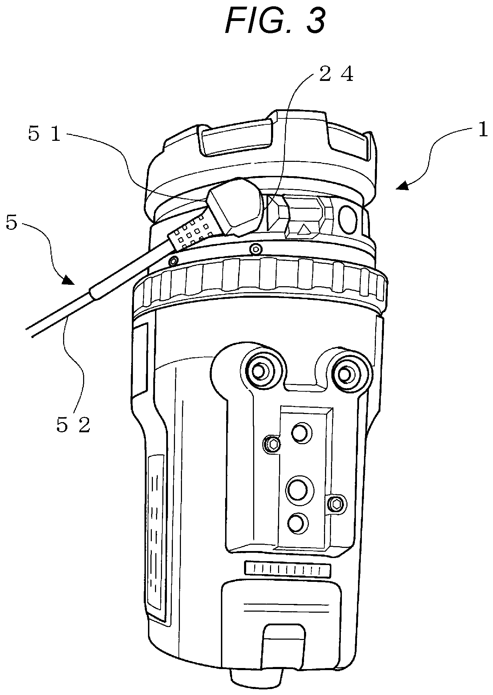

The lighting fixture 1 of the present embodiment which is the underwater lighting fixture 1 preferably further includes a waterproof wall 4 having translucency. Here, the waterproof wall 4 is arranged so as to close the opening 21 of the housing (see FIGS. 1A to 3). The light source 26 (not illustrated) is provided inside surrounded by the housing and the waterproof wall 4. Since the underwater lighting fixture 1 having such a configuration has a structure in which water does not enter, the underwater lighting fixture 1 is suitable for use under water.

Here, "having translucency" in the present specification means a property capable of transmitting light. In addition, in the present specification, the "waterproof wall 4 having translucency" includes both the meaning of a wall body containing a translucent material and the meaning of a wall body containing a transparent material.

Preferable examples of the waterproof wall 4 having translucency include a wall body containing a glass material and/or a resin material. Among them, the waterproof wall 4 having translucency is particularly preferably a wall body containing one or two or more materials selected from glass, an acrylic resin, and a polycarbonate resin.

The lighting fixture 1 including a wall body containing one or more materials selected from glass, an acrylic resin, and a polycarbonate resin is more suitable for use under water because it is excellent in waterproof (water resistance) and translucency.

### (4) Optical fiber cable 5 (corresponding to cable in the present specification)

In the present embodiment, the cable includes a cable body 52 that transmits an optical signal and terminals 51 provided at both ends.

In the present invention, the cable is preferably the optical fiber cable 5.

Here, the shape and the like of the cable are not particularly limited as long as the cable enables optical communication by wired connection between the wired connection port 24 of one lighting fixture 1 and the wired connection port 24 of another lighting fixture 1.

### (5) Aspect of connection

An example of a wired optical communication connection mode and a control scheme between the lighting fixtures 1 in the present embodiment will be described below.

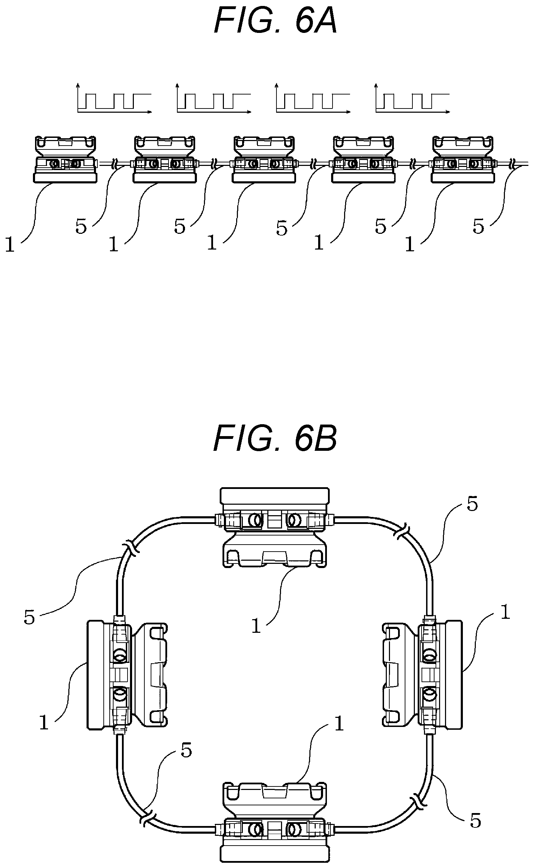

### (5-1) Daisy chain connection (see FIG. 6A)

In the present embodiment, a daisy chain connection is a scheme in which the master device is connected to the slave device via the optical fiber cable 5, and each slave device is further connected to the next slave device in a chain manner. Based on the input of operation unit 25 included in the master device, dimming of another lighting fixture 1 synchronized with the master device becomes possible.

### (5-2) Link connection (see FIG. 6B)

In the present embodiment, the lighting fixtures 1 can be linked to one another.

Here, a link connection is a scheme in which the lighting fixtures 1 are annularly connected to one another via the optical fiber cable 5.

By annularly connecting the lighting fixtures 1 to one another, all the lighting fixtures 1 mutually relay signals to adjacent fixtures, and all the fixtures can be synchronously controlled at the same time when an arbitrary lighting fixture 1 performs input (operation). With the above mode, any of the lighting fixtures has a function of functioning as a master device, and operability of the plurality of lighting fixtures 1 is improved even under water.

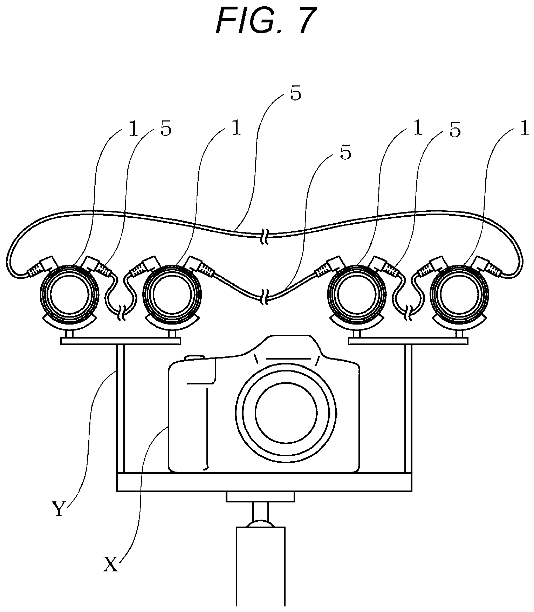

### (5-3) Case where lighting fixture 1 of the present embodiment is used in combination with an underwater camera (camera X) (see FIG. 7)

As illustrated in FIG. 7, in a case where the lighting fixture 1 of the present embodiment is used in combination with a camera X, the plurality of lighting fixtures 1 can be arranged on a light arm with the photographing camera X as the center, and the lighting fixtures 1 can be linked to one another. With the above mode, even if an operation is performed in any one of the right and left lighting fixtures 1, the operation is propagated to all the lighting fixtures 1 annularly connected, and control can be performed by the same signal at the same time from any lighting fixture 1. With the above mode, even if the weight and the number of lighting fixtures 1 increase, all the lighting fixtures 1 can be synchronously dimmed by operating one lighting fixture 1, and the efficiency of the photographing under water can be further improved.

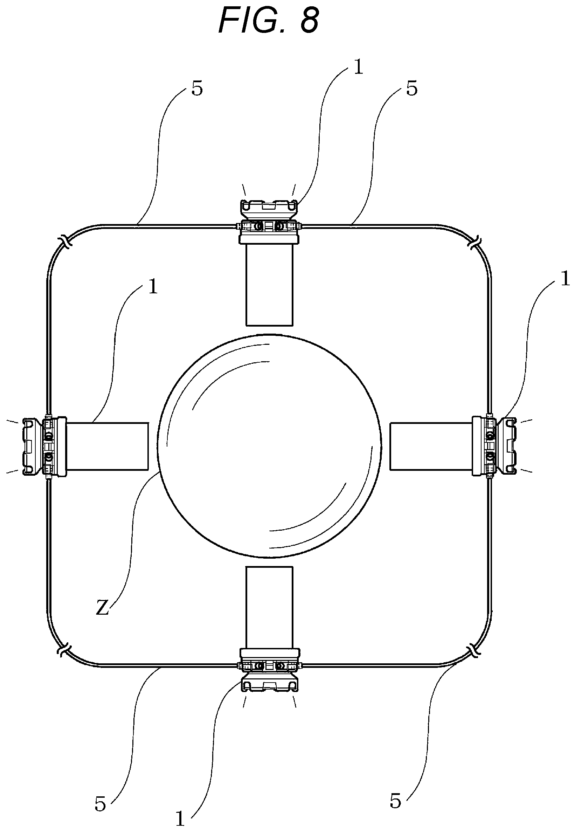

### (5-4) Case where lighting fixture 1 of the present embodiment is used in combination with underwater 360° camera Z (omnidirectional photographing camera) (see FIG. 8)

As illustrated in FIG. 8, in a case where the lighting fixture 1 of the present embodiment is used in combination with a 360° camera Z (omnidirectional photographing camera), the plurality of lighting fixtures 1 can be arranged so as to be directed outward with the 360° camera Z (omnidirectional photographing camera) as the center, and the lighting fixtures 1 can be linked to one another. With the above mode, the operation in any one of the lighting fixtures 1 is propagated to all the lighting fixtures 1 through the circumference of the ring, and control can be performed by the same signal at the same time from any lighting fixture 1. With the above mode, even if the weight and the number of lighting fixtures 1 increase, all the lighting fixtures 1 can be synchronously dimmed by operating one lighting fixture 1, and the efficiency of the photographing workflow can be further improved. In addition, with the above mode, since the control can be performed by the same signal at the same time from any lighting fixture 1 while increasing the light amount and angle, a system configuration that is easy to handle even in VR photographing and special photographing is obtained. With the above mode, all the lighting fixtures 1 can be synchronously dimmed by operating one lighting fixture 1, and the efficiency of the photographing under water can be further improved.

### <2> Lighting fixture set

In addition, the present invention also provides a lighting fixture set including two or more lighting fixtures 1, and a cable that enables optical communication by wired connection between the wired connection port 24 of one lighting fixture 1 and the wired connection port 24 of another lighting fixture 1.

Here, the number of lighting fixtures 1 to be connected is preferably three or more, more preferably five or more, and more preferably 10 or more.

However, in the present embodiment, the number of lighting fixtures 1 to be connected is not particularly limited.

In addition, in the lighting fixture set of the present embodiment, all the lighting fixtures 1 can be synchronously dimmed by operating one lighting fixture 1 without requiring a separate remote controller, and the efficiency of use of the lighting fixture 1 under water can be further improved.

Here, the above description can be incorporated into a preferred embodiment of <2> Lighting fixture set.

### <3> Method for dimming lighting fixture 1

In addition, the present invention is also a method for dimming the lighting fixture 1 including two or more lighting fixtures 1, and a cable that enables optical communication by wired connection between the wired connection port 24 of one lighting fixture 1 and the wired connection port 24 of another lighting fixture 1, in which
another lighting fixture 1 is dimmed by the operation unit 25 of one lighting fixture 1.

Here, the number of lighting fixtures 1 to be connected is preferably three or more, more preferably five or more, and more preferably 10 or more.

However, in the present embodiment, the number of lighting fixtures 1 to be connected is not particularly limited.

In addition, in the lighting fixture set of the present embodiment, all the lighting fixtures 1 can be synchronously dimmed by operating one lighting fixture 1 without requiring a separate remote controller, and the efficiency of use of the lighting fixture 1 under water can be further improved.

Here, the above description can be incorporated into a preferred embodiment of <3> Method for dimming lighting fixture 1.

### INDUSTRIAL APPLICABILITY

The present invention can be particularly applied to an underwater lighting fixture 1.

### Reference Signs List

- 1: lighting fixture
- 11: lighting fixture body
- 2: housing
- 21: opening
- 22: IR transmission unit
- 23: IR reception unit
- 24: wired connection port
- 25: operation unit
- 251: switch
- 252: control unit
- 253: temperature detection unit
- 254: operation indicating lamp
- 26: light source
- 261: LED circuit
- 262: illumination LED
- 27: repeater
- 3: grip
- 4: waterproof wall
- 5: optical fiber cable
- 51: terminal
- 52: cable body
- X: camera
- Y: light arm
- Z: 360° camera

## Claims

1. A lighting fixture (1) comprising:
a housing (2) including an opening (21); and a grip (3) coupled to the housing (2), wherein
the lighting fixture (1) includes
an IR transmission unit (22),
an IR reception unit (23), and
an operation unit (25) capable of instructing the IR transmission unit (22) to transmit a dimming signal, and
the IR transmission unit (22) and/or the IR reception unit (23) include a wired connection port (24) that enables wired optical communication by wired connection with another lighting fixture (1) via a cable (5).

2. The lighting fixture (1) according to claim 1,
comprising a waterproof wall (4) having translucency and arranged to close the opening (21) of the housing (2), wherein the lighting fixture (1) is for underwater use.

3. The lighting fixture (1) according to claim 1 or 2, wherein the IR transmission unit (22) and the IR reception unit (23) are provided on an outer wall of the housing (2).

4. The lighting fixture (1) according to claim 1 or 2, wherein the operation unit (25) includes a dimming switch (251), and
the dimming switch (251) is provided in the housing (2).

5. The lighting fixture (1) according to claim 1 or 2, wherein the operation unit (25) includes two or more dimming switches (251), and
the dimming switch (251), the IR transmission unit (22), and the IR reception unit (23) are provided on a same circumference of the housing (2).

6. A lighting fixture set comprising:
two or more of the lighting fixtures (1) according to claim 1 or 2; and
a cable (5) that enables optical communication by wired connection between the wired connection port (24) of one of the lighting fixtures (1) and the wired connection port (24) of another one of the lighting fixtures (1).

7. A method for dimming the lighting fixture (1) including
two or more of the lighting fixtures (1) according to claim 1 or 2, and
a cable (5) that enables optical communication by wired connection between the wired connection port (24) of one of the lighting fixtures (1) and the wired connection port (24) of another one of the lighting fixtures (1), the method comprising
dimming the another one of the lighting fixtures (1) by the operation unit (25) of the one of the lighting fixtures (1).
